Europäisches Patentamt

European Patent Office

Office européen des brevets

(19)

(11) Veröffentlichungsnummer: **0 064 316**
**B1**

(12) # EUROPÄISCHE PATENTSCHRIFT

(45) Veröffentlichungstag der Patentschrift:
06.08.86

(51) Int. Cl.⁴: **H 04 N 5/16**, H 04 N 5/18

(21) Anmeldenummer: **82200508.8**

(22) Anmeldetag: **29.04.82**

(54) **Schaltungsanordnung zum Regeln des Gleichstrompegels eines Videosignals.**

(30) Priorität: 02.05.81 DE 3117457
21.04.82 DE 3214756

(43) Veröffentlichungstag der Anmeldung:
10.11.82 Patentblatt 82/45

(45) Bekanntmachung des Hinweises auf die Patenterteilung:
06.08.86 Patentblatt 86/32

(84) Benannte Vertragsstaaten:
DE FR GB IT

(56) Entgegenhaltungen:
DE - A - 2 365 509
DE - B - 2 507 231

PATENTS ABSTRACTS OF JAPAN, Band 2, Nr. 58, 26. April 1978, Seite 1619 E78;
IBM TECHNICAL DISCLOSURE BULLETIN, Band 19, Nr. 3, August 1976, Seiten 1049-1050, New York (USA); M.M. SIVERLING et al.: "Optical-scanner video circuit"

(73) Patentinhaber: Philips Patentverwaltung GmbH, Billstrasse 80, D-2000 Hamburg 28 (DE)
(84) Benannte Vertragsstaaten: DE

(73) Patentinhaber: N.V. Philips' Gloeilampenfabrieken, Groenewoudseweg 1, NL-5621 BA Eindhoven (NL)
(84) Benannte Vertragsstaaten: FR GB IT

(72) Erfinder: Wölber, Jörg, Taubenstrasse 32, D-2080 Pinneberg (DE)
Erfinder: Demmer, Walter, Sorthmannweg 15, D-2000 Hamburg 54 (DE)
Erfinder: Kunze, Dieter, Flottmoorring 8, D-2358 Kaltenkirchen (DE)
Erfinder: Hahn, Friedrich, Schrammsweg 4, D-2000 Hamburg 20 (DE)

(74) Vertreter: Hartmann, Heinrich, Dipl.-Ing. et al, Philips Patentverwaltung GmbH Billstrasse 80 Postfach 10 51 49, D-2000 Hamburg 28 (DE)

**Beschreibung**

Die Erfindung bezieht sich auf eine Schaltungsanordnung zum Regeln des Gleichstrompegels eines Videosignals, die eine Grenzwertstufe (Schwellenschaltung) enthält zum Erhalt eines periodischen Schaltsignals aus dem Videosignal und eine Umladeschaltung, die mit Hilfe des Schaltsignals eine Aufladung oder Entladung eines Speichers bewirkt zum Regeln des Gleichstrompegels mit Hilfe eines im Speicher gespeicherten Wertes.

Aus Patent Abstracts of Japan, Band 2, Nr. 58, 26.04. 1978, Seite 1619 E 78, ist eine Klemmschaltung bekannt, bei der das Ausgangssignal dieser Schaltungsanordnung über einen ersten Schalter dem invertierenden Eingang eines Operationsverstärkers zugeführt wird. Der nichtinvertierende Eingang ist an eine Referenzspannungsquelle angeschlossen. Der invertierende Eingang und der Ausgang des Operationsverstärkers sind über einen Kondensator gekoppelt. Ein am Eingang der Schaltungsanordnung als Speicher dienender Koppelkondensator, der über einen zweiten Schalter mit dem Operationsverstärker verbunden ist, wird auf einen festen Bezugspegel geklemmt.

Des weiteren ist aus der DE-AS 2 365 509 eine Schaltungsanordnung der obenerwähnten Art bekannt, in der mit Hilfe des Schaltsignals während eines Teils einer Periode eine Entladung des Speichers verursacht wird, wenn der Gleichstrompegel zu hoch ist, oder eine Aufladung, wenn der Gleichstrompegel zu niedrig ist. Die Aufladung oder Entladung wird bestimmt durch Vergleich eines Referenzpegels des Videosignals mit einem Vergleichspegel während des obenerwähnten Teils der Schaltsignalperiode.

Die Erfindung bezweckt eine Verbesserung einer solchen Schaltungsanordnung.

Eine Schaltungsanordnung der obenerwähnten Art nach der Erfindung ist dadurch gekennzeichnet, dass die Grenzwertstufe ein Schaltsignal liefert, in dem das Tastverhältnis abhängt vom Gleichstrompegel des Videosignals und das Schaltsignal pro Periode des Videosignals eine Aufladung und eine Entladung des Speichers verursacht, so dass die Regelung eine Tastverhältnisregelung ist.

Durch die Massnahme nach der Erfindung hängt die Regelung nicht mehr ab vom Referenzpegel des Videosignals während der Tastzeit, so dass Störungen in diesem Pegel keinen Einfluss ausüben können.

Bemerkt muss werden, dass aus der DE-OS 3 016 092 eine Tastverhältnisregelung an sich bekannt ist zum Unabhängigmachen der Phase des Ausgangssignals einer Phasenregelschaltung von Amplitudenvariationen des Eingangssignals.

Als Speicher kann bei einer Schaltungsanordnung nach der Erfindung ein Kondensator dienen, dem alternativ ein Lade- oder ein Entladestrom zugeführt wird. Für ein digitales Signal kann als Speicher eine Summationsstufe (Akkumulator) verwendet werden, der während der einzelnen Teilintervalle, entsprechend einem höherfrequenten Taktsignal wiederholt, ein positiver oder ein negativer Wert solange zugeführt werden, wie der eine oder der andere Zustand des Schaltsignals am Ausgang des Grenzwertverstärkers auftritt, wobei dem zweiten Eingang des Grenzwertverstärkers das Ausgangssignal der Summationsstufe zugeführt wird.

Nach einer anderen Ausführungsform der Erfindung können Signal und Speicherinhalt durch Reihenschaltung eines Speicherkondensators mit der Signalquelle addiert werden, wobei der Schaltkontakt des Umschalters mit einem, vorzugsweise dem von Masse abgewandten, Anschluss des Speichers, verbunden ist, dem auch das Signal mit einer bestimmten Soll-Lage des Referenzpegels entnommen wird, und wobei an die Endlagenkontakte Stromquellen angeschlossen sind und wobei an den zweiten Eingang des Grenzwertverstärkers eine die gewünschte Soll-Lage des Referzwertes bestimmende Spannung angelegt ist.

Dabei dient also der Koppelkondensator, mit dem die Gleichstrompotentiale getrennt werden, gleichzeitig als Speicher und zusammen mit der Feststellung des Referenzwertes im ankommenden Signal wird ein neuer vorgegebener Referenzwert eingeführt.

Nach einer weiteren Ausführungsform der Erfindung kann an den zweiten Eingang des Grenzwertverstärkers der am Speicher auftretende Mittelwert wirksam sein. Dann ist der Referenzwert am Ausgang auf Null gebracht.

Nach einer weiteren Ausführungsform der Erfindung kann das Signal in digitaler Form dem ersten Eingang eines Komparators zugeführt werden, wobei abhängig vom Vorzeichen seines Ausgangssignals, der erste oder der zweite Wert von zwei Zahlenwerten mit entgegengesetztem Vorzeichen einer als erster Speicher dienenden Summierstufe (Akkumulator) zugeführt und das Ausgangssignal der Summierstufe zum zweiten Eingang des Komparators zugeleitet werden. Der so am Speicher erhaltene Referenzwert kann dann in beliebiger Form weiterverwendet, z. B. durch eine Subtrahierstufe in den Signalkanal eingeführt werden.

Nach einer bevorzugten Ausführungsform der Erfindung kann bei einem innerhalb des Amplitudenbereiches des Signals liegenden Referenzwertes wenigstens annähernd die Beziehung

$$\frac{T_2}{T_3 - T_2} < \frac{s_1}{s_2} < \frac{T_3 - T_1}{T_1} \qquad (1)$$

erfüllt sein, wobei

$T_1$ das Intervall, z.B. der Zeilen-Synchronimpuls-Bereich, ist, in dem das Signal oberhalb des Referenzwertes liegt,

$T_2$ das Intervall, z.B. der Videosignal-Bereich, ist, in dem das Signal unterhalb des Referenzwertes liegt,

$T_3$ die Periodendauer des Signals,

$s_1$ der den Speicherinhalt in einem Entlade-Intervall effektiv je Zeiteinheit vermindernde, und

$s_2$ der den Speicherinhalt in einem Lade-Intervall effektiv je Zeiteinheit erhöhende Wert sind.

Bei einer derartigen Einstellung kann der im Signal enthaltene Referenzwert auch bei schwankenden Signalamplituden und ohne Tastung erhalten werden.

Dasselbe gilt nach einer anderen Ausführung der Erfindung für das Einstellen eines am Rande des Amplitudenbereiches des Signals liegenden Referenzwertes, z.B. des Synchronimpulsscheitels in einem Fernsehsignal, wenn wenigstens annähernd die Beziehung

$$\frac{T_3-T_1/4}{T_1/4} > \frac{s_1}{s_2} > \frac{T_3-T_1}{T_1} \qquad (2)$$

erfüllt ist, wobei

$T_1$ das Intervall, z.B. der Zeilen-Synchronimpuls-Scheitel, ist, in dem das Signal auf dem Referenzwert liegt,

$T_3$ die Periodendauer des Signals,

$s_1$ der den Speicherinhalt in einem Entlade-Intervall effektiv je Zeiteinheit vermindernde und

$s_2$ der den Speicherinhalt in einem Lade-Intervall effektiv je Zeiteinheit erhöhende Wert sind.

$s_1$ und $s_2$ können dabei durch Ströme oder Spannungen oder auch durch digitale Werte bestimmt sein.

Die Erfindung wird nachstehend anhand der Zeichnung beispielsweise näher erläutert, in der

Fig. 1 das Prinzip der Erfindung etwa nach Art eines Blockschaltbildes zeigt, während in

Fig. 2a und b verschiedene Signalformen dargestellt sind,

Fig. 3 eine andere Ausführungsform der Schaltung nach Art eines Blockschaltbildes zeigt, und in

Fig. 4 eine Schaltung nach der Erfindung mehr im Detail wiedergegeben ist.

Fig. 5 zeigt eine weitere Ausführungsform nach Art eines Blockschaltbildes und in

Fig. 6 ist eine Ausführungsform in digitaler Technik dargestellt.

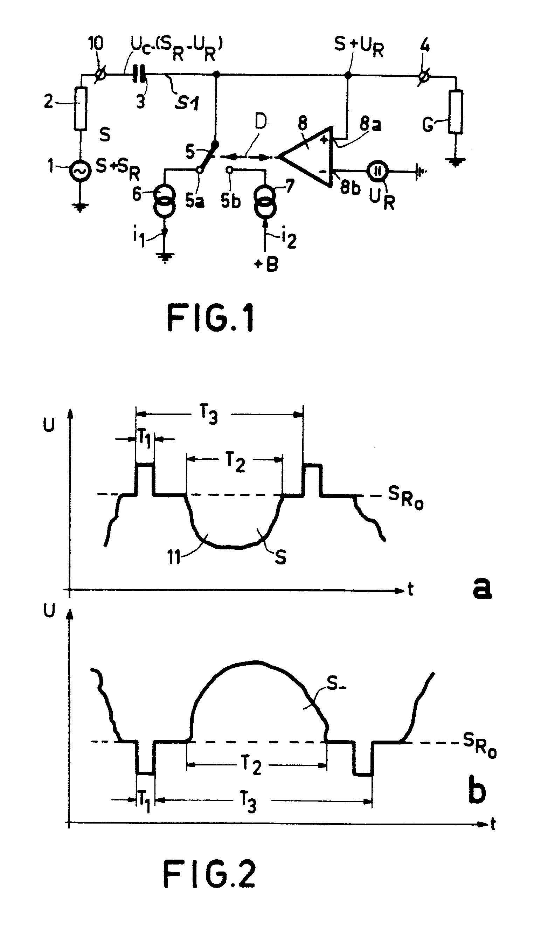

In der Schaltungsanordnung nach Fig. 1 wird von einer Signalquelle 1 mit Innenwiderstand 2 an der Klemme 10 ein Fernseh-Videosignal S nach Fig. 2a mit positiv gerichteten Synchronimpulsen, einer Zeilenperiode $T_3$, einer Zeilen-Synchronimpulsbreite $T_1$ und einem Videosignal-Intervall $T_2$ zugeführt. Zwischen den Synchronimpulsen und dem Videosignal tritt der Schwarzpegel $S_{Ro}$ auf. Dieses Signal S wird über einen Kondensator 3 an eine Ausgangsklemme 4 übertragen. Hinter dem Kondensator 3, an der Klemme 4, hat das Signal seine Gleichspannungskomponente verloren, so dass der Schwarzpegel $S_R$, abhängig vom Bildinhalt, schwanken würde. Das Signal S wird nach der Erfindung dem Eingang 8a (+) einer Vergleichsstufe 8 zugeführt, deren anderer Eingang 8b (−) über eine nahezu konstante Grenzwertspannung $U_R$ an Erde liegt. Die Vergleichsstufe 8 ist so ausgebildet, dass an ihrem Ausgang ein Schaltsignal D auftritt, das einen ersten Zustand $D_1$ aufweist, wenn das Eingangssignal grösser ist als die einen Grenzwert bildende konstante Spannung $U_R$ und das einen zweiten Zustand $D_2$ aufweist, wenn das Eingangssignal S kleiner ist als diese Grenzwertspannung $U_R$.

Durch das Schaltsignal D wird die Umschaltzunge eines Umschalters 5 betätigt, dessen Endlagenkontakte 5a und 5b über eine erste Stromquelle 6 mit Masse bzw. über eine zweite Stromquelle 7 mit dem positiven Pol der Speisequelle + B von 12 Volt verbunden ist. Der Schaltkontakt des Umschalters 5 ist an einen Belag des Kondensators 3 angeschlossen und liegt damit an der Ausgangsklemme 4, die mit einer hochohmigen Belastung G verbunden ist, die keine weiteren Rückwirkungen zeigt. Der andere Belag des Kondensators 3 steht mit der Eingangsklemme 10 und damit über die Signalquelle 1 und ihren niederohmigen Innenwiderstand 2 mit Masse in Verbindung.

In der dargestellten Lage des Schaltkontaktes des Umschalters 5 wird dem Kondensator über die Stromquelle 6 ein Entladestrom $i_1$ nach Masse entnommen. In der nicht dargestellten anderen Lage wird dem Kondensator 3 von der Speisequelle + B ein Ladestrom $i_2$ zugeführt. Der Kondensator 3 dient hierbei als Speicher, der die zugeführte bzw. abgeführten Ladungen ausgleicht und eine einem Mittelwert entsprechende Spannung $U_c$ führt. Der Gleichgewichtszustand der zugeführten und abgeführten Ladungen ist erreicht, wenn die Beziehung

$$\frac{T_2}{T_3-T_2} < \frac{i_1}{i_2} < \frac{T_3-T_1}{T_1} \qquad (1a)$$

erfüllt ist. Dabei sind

$T_1$ das Intervall, z.B. der Zeilen-Synchronimpuls-Bereich, in dem das Signal S oberhalb des enthaltenen Referenzwertes $S_{Ro}$ liegt,

$T_2$ das Intervall, z.B. der Videosignal-Bereich, in dem das Signal S unterhalb des Referenzwertes $S_{Ro}$ liegt,

$T_3$ die Periodendauer des Signals S,

$i_1$ der die Ladung des Speicherkondensators 3 in einem Entladeintervall effektiv vermindernde Stromwert und

$i_2$ der die Ladung in einem Ladeintervall effektiv erhöhende Stromwert sind.

Der Schalter 5 wird mit Hilfe des Schaltsignals D von der Vergleichsstufe 8 immer dann umgeschaltet, wenn das Signal $S_1$ am Ausgang des Kondensators 3 und damit an der Ausgangsklemme 4 oberhalb oder unterhalb der Grenzwertspannung $U_R$ liegt. Wenn durch eine Verschiebung des Referenzpegels $S_{Ro}$ im Signal S eine Verschiebung des Signals $S_1$ am Ausgang des Kondensators 3 eintritt, wird der Strom $i_1$ oder der Strom $i_2$ länger wirksam sein derart, dass die Verschiebung korrigiert und die Spannung $S_{R1}$ an der Ausgangsklemme 4 beim Referenzpegel den Wert $U_R$ beibehält. Dieser Referenzpegel entspricht bei einem Fernsehsignal dem Schwarz-Niveau, so dass die folgende Signalverschiebung auf diesen Pegel bezogen werden kann.

Wird dem Kondensator 3 von der Signalquelle 1 ein in Fig. 2b dargestelltes Fernseh-Videosignal $S_-$ mit negativ gerichteten Synchronimpulsen zugeführt, so stellt sich für die Spannung U an der ausgangsseitigen Elektrode des Kondensators 3 das Schwarz-Niveau $S_{Ro}$ auf die Referenzspan-

nung $U_R$ ein, wenn man in der Beziehung (1a) $i_1$ und $i_2$ vertauscht.

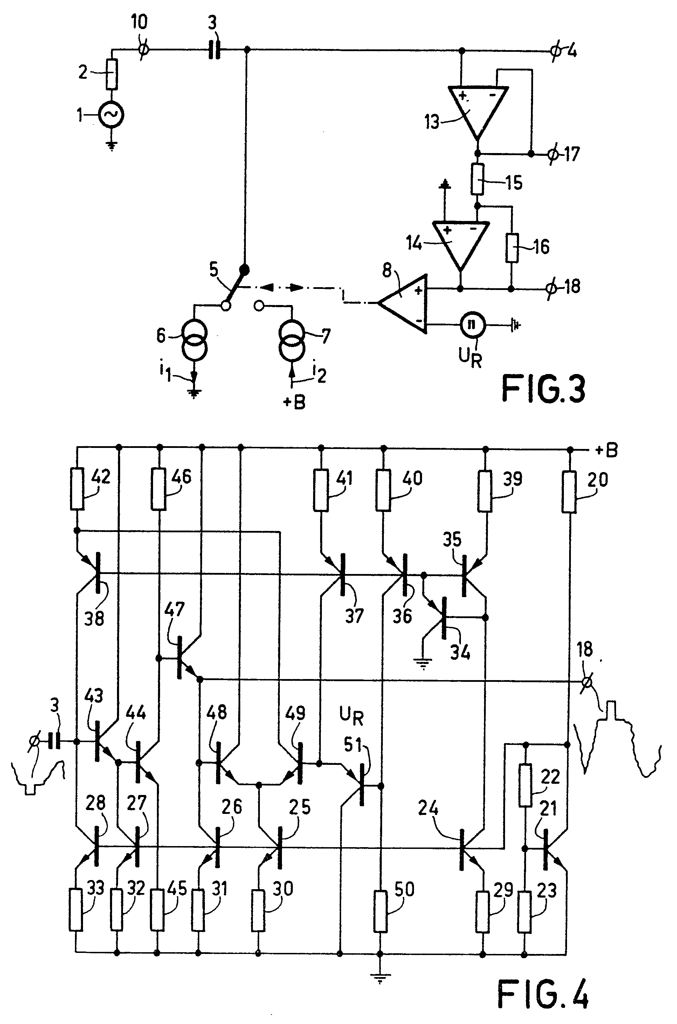

Insbesondere wenn die Vergleichsschaltung 8 einen niedrigen Eingangswiderstand und/oder eine geringe Empfindlichkeit aufweist, kann es zweckmässig sein, nach Fig. 3 zwischen der der Klemme 4 zugeführten Ausgangsspannung und dem Eingang 8a der Vergleichsstufe 8 diese Spannung zunächst einem Impedanzwandler 13 und einem nachfolgenden Spannungsverstärker 14 und dann erst dem nicht invertierten Eingang 8a der Vergleichsschaltung 8 zuzuführen. Wenn das Signal dem nicht invertierenden Eingang eines Operationsverstärkers 13 zugeführt wird, dessen invertierender Eingang mit seiner Ausgangsklemme verbunden ist, erhält man einen sehr hohen Eingangs- und einen niedrigen Ausgangswiderstand, so dass am Ausgang praktisch die am Eingang zugeführte Spannung vom Kondensator 3 als niederohmige Spannungsquelle zur Verfügung steht. Wenn diese Ausgangsspannung über einen Widerstand 15 dem invertierenden Eingang eines weiteren Operationsverstärkers 14 zugeführt wird, dessen nicht invertierender Eingang an Erde liegt und dessen Ausgang über einen Widerstand 16 mit seinem invertierenden Eingang verbunden ist, so erhält man am Ausgang des Operationsverstärkers 14 eine im Verhältnis von $R_{16}/R_{15}$ verstärkte und invertierte Spannung, wobei $R_{15}$ und $R_{16}$ die Werte der Widerstände 15 bzw. 16 sind. Die so verstärkte Spannung steuert dann die, z.B. ebenfalls einen Operationsverstärker enthaltende, Vergleichsschaltung 8. Diese muss jetzt die Entladestromquelle 6 an den Kondensator 3 schalten, wenn dort die Spannung $U_R$ überschritten wird, – die verstärkte und invertierte Spannung am Eingang 8a der Vergleichsstufe 8 unterschreitet dabei $U_R$ – und die Vergleichsschaltung 8 muss die Stromquelle 7 an den Kondensator 3 schalten, wenn dort die Spannung $U_R$ unterschritten wird. (Die verstärkte und invertierte Spannung am Eingang 8a der Vergleichsschaltung 8 überschreitet dabei $U_R$.)

Vorteilhafterweise kann das Eingangssignal dabei auch bei dem Ausgang 17 des Impedanzwandlers 13 oder invertiert und verstärkt dem Ausgang 18 des Verstärkers 14 entnommen werden. An allen drei Ausgangsklemmen 4, 17 und 18 stimmt der Referenzpegel des entnommenen Signals mit $U_R$ überein.

Damit die zugeführten Lade- bzw. Entladeströme keinen störenden Spannungsabfall im Signal hervorrufen, soll der Innenwiderstand 2 der Signalquelle 1 so klein sein, dass durch die erwähnten Ströme $i_1$ und $i_2$ keine unzulässige Verschiebung des Bezugspotentials hervorgerufen wird.

Wird ein Videosignal nach Fig. 2a, das auf seinen Schwarzwert geklemmt werden soll, der Schaltung nach Fig. 3 zugeführt, so ist die Beziehung (1a) zu erfüllen.

Fig. 4 zeigt im Detail eine Ausführungsform der Erfindung, der an der Eingangsklemme 10 vor dem Kondensator 3 ein Videosignal $S_-$ mit negativ gerichteten Synchronimpulsen (vgl. Fig. 2b) zugeführt wird. Die in Fig. 3 dargestellten Operationsverstärker sind in Fig. 4 durch einfache Transistoren oder Transistor-Differenzverstärker gebildet.

Mittels des Widerstandes 20 von 22 kOhm zwischen dem +Pol der Speisequelle B von 12 V und dem Kollektor eines npn-Transistors 21 wird am Kollektor des Transistors 21 eine stabilisierte Spannung von 1 V erzeugt. Dies wird dadurch erreicht, dass ein Widerstand 22 von 3,3 kOhm den Kollektor des Transistors 21 mit seiner Basis verbindet und dass andererseits ein Widerstand 23 von 6,8 kOhm zwischen der Basis dieses Transistors und Masse liegt. Der Emitter des Transistors 21 liegt ebenfalls an Masse.

Die so gewonnene Spannung speist die Basis der npn-Stromquellen-Transistoren 24, 25, 26, 27 und 28, die mit ihren Emitterwiderständen 29 von 3,3 kOhm, 30 von 7 kOhm, 31 von 7 kOhm, 32 von 7,5 kOhm und 33 von 82 kOhm an Masse liegen. Der Stromquellentransistor 24 speist seinerseits die pnp-Transistoren 34 und 35, wobei der Emitterwiderstand 39 von 1 kOhm des Transistors 35 am +Pol der Speisequelle liegt und sein Kollektor mit dem von Transistor 24 und der Basis von Transistor 34 verbunden ist, dessen Kollektor an Masse liegt. Der Emitter des Transistors 34 speist die Basen des Transistors 35 und der pnp-Stromquellentransistoren 36, 37 und 38, deren Emitterwiderstände 40 von 1 kOhm, 41 von 7 kOhm und 42 von 3,7 kOhm ebenfalls an +B liegen.

Das Eingangssignal $S_-$ vom Kondensator 3 wird der Basis eines npn-Transistors 43 zugeführt, der als Emitterfolger dient; sein Kollektor ist mit +B und sein Emitter ist mit dem Kollektor des Stromquellentransistors 27 verbunden.

Das Eingangssignal vom Emitter des Transistors 43 wird der Basis eines npn-Transistors 44 zugeführt, dessen Emitterwiderstand 45 von 1 kOhm an Masse liegt und dessen Kollektorwiderstand 46 von 15 kOhm an +B liegt. Vom Kollektor des Transistors 44 wird das Signal einem npn-Emitterfolger 47 zugeführt, dessen Kollektor mit +B und dessen Emitter mit dem Kollektor des Stromquellentransistors 26 sowie mit der Ausgangsklemme 18 verbunden ist, an der ein invertiertes Videosignal auftritt.

Der Transistor 43 dient als Impedanzwandler, der Transistor 44 als Verstärker und Inverter, der Transistor 47 schliesslich wieder als Impedanzwandler für das Eingangssignal, das dadurch etwa 15-fach verstärkt und invertiert wird. Das Signal vom Emitter des Transistors 47 wird einem Differenzverstärker, bestehend aus npn-Transistoren 48, 49 und dem Stromquellentransistor 25, an der Basis des Transistors 48 zugeführt. An der Basis von Transistor 49 liegt die Referenzspannung $U_R$. Diese wird dadurch erzeugt, dass der Strom aus dem Stromquellentransistor 36 in den Widerstand 50 von 14 kOhm geleitet wird, der mit einem Ende an Masse liegt. Die am Widerstand 50 entstehende Spannung wird über einen pnp-Emitterfolger 51, dessen Kollektor an Masse und dessen Emitter mit dem Kollektor des Stromquellentransistors 37 verbunden ist, als Referenzspannung der Basis des Transistors 49 zugeführt.

Wenn das Ausgangssignal an der Klemme 18 die Referenzspannung $U_R$ unterschreitet, wird der Transistor 49 leitend und schaltet den Stromquellentransistor 38 ab, da der Kollektor des Transistors 49 mit dem Emitter des Transistors 38 verbunden ist. Ist die Ausgangsspannung höher als die Referenzspannung, so ist der Transistor 49 gesperrt und der Stromquellentransistor 38 leitend. Die Ströme der Stromquellentransistoren 38 und 28 werden auf dem ausgangsseitigen Belag des Kondensators 3 geführt, indem die Kollektoren 38 und 28 mit ihm verbunden sind. Dabei entlädt der Strom $I_{28}$ des Transistors 28 den Kondensator 3 ständig, während der Strom $I_{38}$ des Transistors 38 den Kondensator 3 nur dann auflädt, wenn die Ausgangsspannung höher als die Referenzspannung ist. Wird hier die Bedingung

$$\frac{T_2}{T_3-T_2} < \frac{I_{38}+I_{28}}{I_{28}} < \frac{T_3-T_1}{T_1} \qquad (1b)$$

eingehalten, so ist der Referenzpegel im Ausgangssignal auf die Referenzspannung geklemmt.

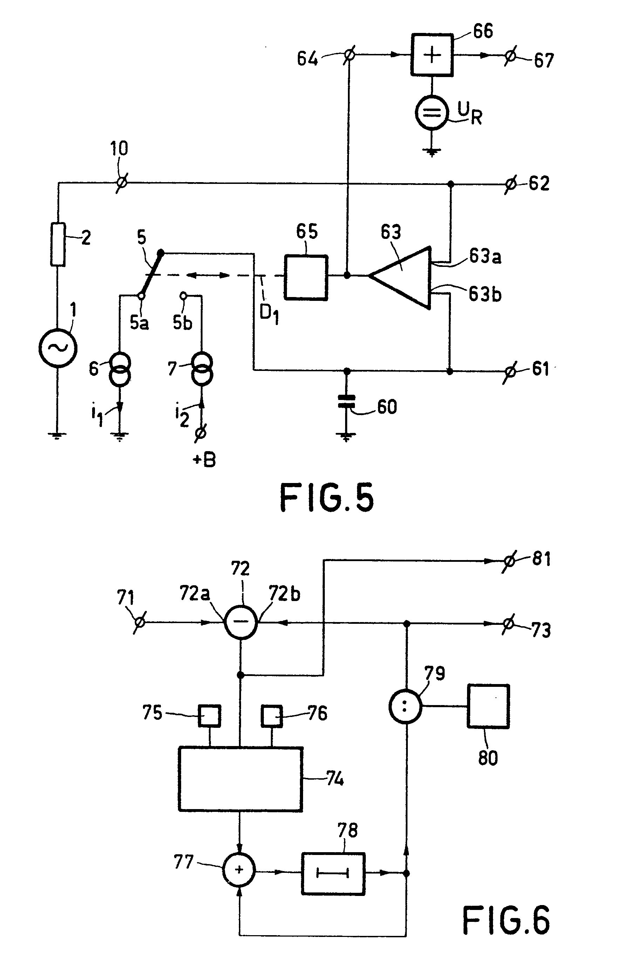

Fig. 5 zeigt eine andere Ausführungsform, bei der der in dem von der Klemme 10 zugeführten Signal S enthaltene Referenzwert $S_{Ro}$ getrennt vom Signalkanal an einem andererseits an Erde angeschlossenen Kondensator 60 und einer mit diesem verbundenen Klemme 61 erhalten wird.

Das Signal S von der Quelle 1 mit Innenwiderstand 2 wird, wie in Fig. 1, über die Eingangsklemme 10 zugeführt, die hier direkt mit der Ausgangsklemme 62 verbunden ist. Dieses Signal S wird ausserdem dem (+)Eingang 63a eines Differenzverstärkers 63 zugeführt, an dessen (−)Eingang 63b der Kondensator 60 angeschlossen ist. Wenn nach der Erfindung am Kondensator 60 eine Spannung erhalten ist, die dem jeweiligen Referenzpegel $S_{Ro}$ im Signal S von der Quelle 1 gleich ist, tritt an der Ausgangsklemme 64, die mit dem Ausgang des Differenzverstärkers 63 verbunden ist, ein Signal auf, bei dem der Referenzpegel auf den Wert Null gebracht ist.

Entsprechend dem von der Quelle 1 zugeführten Signal S schwankt das Signal am Ausgang des Differenzverstärkers 63, der weiter mit einer Vorzeichenstufe 65 verbunden ist, um diesen Nullwert. Die Vorzeichenstufe 65 liefert an ihrem Ausgang ein Schaltsignal $D_1$, das einen ersten Wert einnimmt, wenn das der Stufe 65 zugeführte Signal S positiv ist, und das einen zweiten Wert annimmt, wenn das Signal S negativ ist. Dieses Schaltsignal $D_1$ betätigt, wie in Fig. 1 die Zunge eines Umschalters 5, dessen Mittelkontakt hier mit dem Kondensator 60 verbunden ist, während der eine Endlagenkontakt 5a über eine Stromquelle 6, die einen Strom $i_1$ aufnimmt, an Erde liegt, und der Endlagenkontakt 5b über eine Stromquelle 7, die einen Strom $i_2$ liefert, an die Batterie +B von 12 Volt angeschlossen ist. Der Umschalter 5, 5a, 5b kann, wie auch in Fig. 1, durch elektronische Stufen realisiert werden, wie z.B. an Hand von Fig. 4 erläutert wurde.

Das an der Ausgangsklemme 64 auftretende Signal mit einem auf Null geklemmten Referenzpegel $S_{R2}$ kann einer Additionsstufe 66 zugeführt werden, deren anderer Eingang mit einer Spannungsquelle $U_R$ verbunden ist. Am Ausgang 67 tritt dann das Signal auf, wobei, unabhängig von der Lage in dem von der Quelle 1 gelieferten Signal, der Referenzwert $S_{R2}$ stets auf dem Wert $U_R$ liegt.

Durch die in Fig. 5 dargestellte Schaltung wird, je nach dem Vorzeichen des Signals am Ausgang des Differenzverstärkers 63, dem Kondensator 60 entweder ein Ladestrom $i_2$ zugeführt oder ein Entladestrom $i_1$ entnommen. Der Wert des Referenzpegels stellt sich dann so ein, dass entsprechend der Formel (1) die Integrale der Ströme $i_1$ und $i_2$ entsprechend den jeweiligen Zeiten, in denen das Signal oberhalb oder unterhalb des Referenzpegels liegt, ausgleichen.

Fig. 6 zeigt eine Ausführung der Erfindung für ein digitales Videosignal $S_D$, das an der Klemme 71, ggf. in Zeitmultiplex oder in mehreren Kanälen gleichzeitig, zugeführt wird. Dieses Signal $S_D$ wird einem Subtrahierer (Komparator) 72 zugeführt, an dessen anderem Eingang ein digitales Signal liegt, das dem Referenzwert entspricht und an der Ausgangsklemme 73 entnommen werden kann.

Die Differenz zwischen dem Eingangssignal $S_D$ von der Klemme 71 und dem mit Hilfe der Schaltung nach der Erfindung festgestellten Mittelwert des Referenzwertes, der an der Klemme 73 auftritt, wird einer Umschaltstufe 74 zugeführt, in der, abhängig vom Vorzeichen dieser Differenz, ein erster Wertegeber 75 mit dem Wert $s_1 = 2$ oder aber ein Wertegeber 76 mit dem Wert $s_2 = -13$ angeschaltet wird an den ersten Eingang einer Addierstufe 77, an deren Ausgang eine Verzögerungsstufe 78 angeschlossen ist, deren Ausgang an den zweiten Eingang des Addierers 77 und über einen Teiler 79 an den Ausgang 73 angeschlossen ist. Der Teiler 79 ist z.B. von einem Festwertegeber 80 auf einen konstanten Divisor, z.B. 2048, eingestellt.

In der Verzögerungsstufe 78 wird der vom Ausgang des Addierers 77 erhaltene Wert über einen Takt des Digitalsignals verzögert, so dass die Stufen 77 und 78 zusammen als Summierer wirken, an dessen Ausgang die Summe aller zugeführten Eingangssignale jeweils auftritt.

Im Betrieb werden dann während eines Teiles einer Signalperiode $T_3$ positive und während eines anderen Teiles der Signalperiode negative Werte entsprechend dem gewählten Takt an den Summierer 77, 78 zugeführt, so dass an seinem Ausgang ein Mittelwert entsteht. Dieser wird, um eine Verzögerung des Einflusses auf den Eingang der Subtrahierstufe 72 zu erzielen, über dem Teiler 79 entsprechend einen hohen Faktor untersetzt. Dies kann in einfacher Weise durch Stellenverschiebung erreicht werden.

Wenn in der Schaltung nach Fig. 6 die Werte der Wertegeber 75 und 76 zu $s_1$ bzw. $-s_2$ derart gewählt werden, dass die Beziehung

$$\frac{T_3-T_1/4}{T_1/4} > \frac{s_1}{s_2} > \frac{T_3-T_1}{T_1}$$

erfüllt ist, kann mit dieser Anordnung auch ein am Rande des Amplitudenbereiches des Signales $S_D$

liegender Referenzwert, z.B. der Impulsscheitel eines Fernsehsignals, festgestellt werden, wobei

$T_1$ das Intervall, z.B. der Zeilen-Synchronimpuls-Scheitel, ist, in dem das Signal auf dem Referenzwert liegt,

$T_3$ die Periodendauer des Signals,

$s_1$ der den Speicherinhalt in einem Entladeintervall effektiv je Zeiteinheit vermindernde und

$s_2$ der den Speicherinhalt in einem Ladeintervall effektiv je Zeiteinheit erhöhende Wert sind.

Das Signal mit auf den Nullwert geklemmten Referenzpegel könnte dem Ausgang der Subtrahierstufe 72 entnommen und einem Ausgang 81 zugeführt werden. Gegebenenfalls könnte, wie in Fig. 5, dann über eine zusätzliche Addierstufe ein gewünschter Wert für den Referenzpegel eingeführt werden.

Mit einer Schaltung nach Fig. 6 können also in einem Fernsehsignal sowohl der Schwarzwert und damit der Impulsfuss wie auch der Impulsscheitel festgestellt werden. Daraus kann der geometrische Mittelwert abgeleitet werden, der dann als Schwelle für die Abtrennung der Synchronimpulse in der weiteren Schaltung verwendet werden kann.

## Patentansprüche

1. Schaltungsanordnung zum Regeln des Gleichstrompegels eines Videosignals, die eine Grenzwertstufe (Schwellenschaltung) enthält zum Erhalt eines periodischen Schaltsignals aus dem Videosignal und eine Umladeschaltung, die mit Hilfe des Schaltsignals eine Aufladung oder Entladung eines Speichers bewirkt zum Regeln des Gleichstrompegels mit Hilfe eines im Speicher gespeicherten Wertes, dadurch gekennzeichnet, dass die Grenzwertstufe ein Schaltsignal liefert, in dem das Tastverhältnis abhängt vom Gleichstrompegel des Videosignals und das Schaltsignal pro Periode des Videosignals eine Aufladung und eine Entladung des Speichers verursacht, so dass die Regelung eine Tastverhältnisregelung ist.

2. Schaltungsanordnung nach Anspruch 1, dadurch gekennzeichnet, dass als Speicher ein Kondensator (3) dient, dem alternativ vom Konstant-Wertegeber (6 bzw. 7) ein Lade- oder Entladestrom ($i_1$ bzw. $i_2$) zugeführt wird (Fig. 1).

3. Schaltungsanordnung nach Anspruch 1, insbesondere für ein digitales Signal, dadurch gekennzeichnet, dass als Speicher eine Summationsstufe (77, 78) dient, der, entsprechend einem höherfrequenten Taktsignal (T) wiederholt ein positiver oder ein negativer Wert (75 oder 76) solange zugeführt werden, wie der eine oder der andere Zustand des Schaltsignals (D) am Ausgang des Grenzwertverstärkers (72, 74) auftritt, wobei dem zweiten Eingang des Grenzwertverstärkers das Ausgangssignal der Summationsstufe (77. 78) zugeführt wird (Fig. 6).

4. Schaltungsanordnung nach Anspruch 1 oder 2, dadurch gekennzeichnet, dass Signal (S) und Speicherinhalt durch Reihenschaltung eines Speicher-Kondensators (3) mit der Signalquelle addiert werden, dass der Schaltkontakt des Umschalters (5) mit einem, vorzugsweise dem von Masse abgewandten, Anschluss des Speichers (3), verbunden ist, dem auch das Signal mit einer bestimmten Soll-Lage des Referenzpegels ($S_{R1}$) entnommen wird, dass an die Endlagenkontakte (5a, 5b) des Umschalters (5) Stromquellen (6, 7) angeschlossen sind und dass an den zweiten Eingang des Grenzwertverstärkers (8) eine die gewünschte Soll-Lage des Referenzwertes ($S_{R1}$) bestimmte Spannung ($U_R$) angelegt ist (Fig. 1).

5. Schaltungsanordnung nach einem der vorangehenden Ansprüche, dadurch gekennzeichnet, dass an den zweiten Eingang (63b) des Grenzwertverstärkers (63) der am Speicher (60) auftretende Mittelwert wirksam ist (Fig. 5).

6. Schaltungsanordnung nach Anspruch 5, dadurch gekennzeichnet, dass das Signal in digitaler Form dem ersten Eingang (72a) eines Komparators (72) zugeführt wird und dass, abhängig vom Vorzeichen seines Ausgangssignals, der erste oder der zweite von zwei Zahlenwerten (75 bzw. 76) mit entgegengesetztem Vorzeichen einer als erster Speicher dienenden Summierstufe (77, 78) zugeführt und dass das Ausgangssignal der Summierstufe (77, 78) ggf. über einen festen Teiler (79, 80) dem zweiten Eingang (72b) des Komparators zugeleitet wird.

7. Schaltungsanordnung nach einem der vorangehenden Ansprüche, dadurch gekennzeichnet, dass bei einem innerhalb des Amplitudenbereiches des Signals (S) liegenden Referenzwert ($S_{Ro}$) wenigstens annähernd die Beziehung

$$\frac{T_2}{T_3-T_2} < \frac{s_1}{s_2} < \frac{T_3-T_1}{T_1}$$

erfüllt ist, wobei

$T_1$ das Intervall, z.B. der Zeilen-Synchronimpuls-Bereich, ist, in dem das Signal (S) oberhalb des Referenzwertes ($S_{Ro}$) liegt,

$T_2$ das Intervall, z.B. der Videosignal-Bereich, ist, in dem das Signal unterhalb des Referenzwertes ($S_{Ro}$) liegt,

$T_3$ die Periodendauer des Signals (S),

$s_1$ der den Speicherinhalt in einem Entladeintervall effektiv je Zeiteinheit vermindernde und

$s_2$ der den Speicherinhalt in einem Ladeintervall effektiv je Zeiteinheit erhöhende Wert sind.

8. Schaltungsanordnung nach einem der vorangehenden Ansprüche, dadurch gekennzeichnet, dass zum Einstellen eines am Rande des Amplitudenbereiches des Signals (S) liegenden Referenzwertes ($S_{Ro}$) wenigstens annähernd die Beziehung

$$\frac{T_3-T_1/4}{T_1/4} > \frac{s_1}{s_2} > \frac{T_3-T_1}{T_1}$$

erfüllt ist, wobei

$T_1$ das Intervall, z.B. der Zeilen-Synchronimpuls-Scheitel, ist, in dem das Signal (S) auf dem Referenzwert ($S_{Ro}$) liegt,

$T_3$ die Periodendauer des Signals (S),

$s_1$ der den Speicherinhalt in einem Entladeintervall effektiv je Zeiteinheit vermindernde und

$s_2$ der den Speicherinhalt in einem Ladeintervall effektiv je Zeiteinheit erhöhende Wert sind.

## Claims

1. A circuit arrangement for controlling the direct current level of a video signal comprising a limit value stage (threshold circuit) for deriving from the video signal a periodic switching signal, and a charging/discharging circuit which by means of the switching signal provides charging of a storage means to control the direct current level by means of a value stored in the storage means, characterized in that the limit value stage produces a switching signal in which the duty cycle depends on the direct current level of the video signal and the switching signal causes in each period of the video signal a charging and a discharging of the storage means so that the control is a duty cycle control.

2. A circuit arrangement as claimed in Claim 1, characterized in that a capacitor (3) serves as the storage means, to which alternately a charging or a discharging current ($i_1$ and $i_2$ respectively), is applied from constant-value generating means (6 and 7, respectively) (Figure 1).

3. A circuit arrangement as claimed in Claim 1, particularly for a digital signal, characterized in that an adder stage (77, 78) serves as the storage means, a positive or a negative value (75 or 76) being repeatedly applied to this adder stage in accordance with a sampling signal (T) of a higher frequency, for such a long period of time that either the one or the other state of the switching signal (D) occurs at the output of the limit value amplifier (72, 74), the output signal of the adder stage (77, 78) being applied to the second input of the limit value amplifier (Figure 6).

4. A circuit arrangement as claimed in Claim 1 or 2, characterized in that the signal (S) and the storage means content are added together by the series arrangement of a storage capacitor (3) and the signal source, that the switching contact of the change-over switch (5) is connected to a terminal, which preferably faces away from ground, of the storage means (3), from which also the signal is taken with a predetermined required value of the reference level ($S_{R1}$), that current sources (6, 7) are connected to the fixed contacts (5a, 5b) of the change-over switch (5) and that a voltage ($U_R$) which determines the required value of the reference value ($S_{R1}$) is applied to the second input of the limit value amplifier (8) (Figure 1).

5. A circuit arrangement as claimed in one of the preceding Claims, characterized in that the mean value occurring at the storage means (60) is operative at the second input (63b) of the limit value amplifier (63) (Figure 5).

6. A circuit arrangement as claimed in Claim 5, characterized in that the signal is applied in digital form to the first input (72a) of a comparator (72) and that, depending on the sign of its output signal, the first or the second one of two numerical values (75 and 76, respectively) are applied with opposite signs to an adder stage (77, 78) which serves as the first storage means and that the output signal of the adder stage (77, 78) is possibly applied to the second input (72b) of the comparator via a fixed divider (79, 80).

7. A circuit arrangement as claimed in one of the preceding Claims, characterized in that at a reference value ($S_{RO}$) located within the amplitude of the signal (S) the relation

$$\frac{T_2}{T_3-T_2} < \frac{s_1}{s_2} < \frac{T_3-T_1}{T_1}$$

is at least substantially satisfied, wherein
$T_1$ is the interval, for example the line synchronizing pulse range in which the signal (S) is located above the reference value ($S_{RO}$),
$T_2$ is the interval, for example the video signal range, in which the signal is located below the reference value ($S_{RO}$),
$T_3$ is the period of the signal (S),
$s_1$ is the value which effectively reduces the storage content in a discharging interval per unit of time and
$s_2$ is the value which effectively increases the storage content in a charging interval per unit of time.

8. A circuit arrangement in one of the preceding Claims, characterized in that for adjusting a reference value ($S_{RO}$) which is located at the edge of the amplitude range of the signal (S) the relation

$$\frac{T_3-T_1/4}{T_1/4} > \frac{s_1}{s_2} > \frac{T_3-T_1}{T_1}$$

is at least substantially satisfied, wherein
$T_1$ is the interval, for example the line synchronizing pulse peak, in which the signal (S) is at the reference value ($S_{RO}$),
$T_3$ is the period of the signal (S),
$s_1$ is the value which effectively reduces the storage content in a discharging interval per unit of time and
$s_2$ is the value which effectively increases the storage content in a charging interval per unit of time.

## Revendications

1. Montage destiné à régler le niveau de courant continu d'un signal vidéo, qui comprend un étage à valeur limite (circuit seuil) pour recevoir un signal de commutation périodique à partir du signal vidéo et un circuit de transfert de charge qui, à l'aide du signal de commutation, assure une charge ou une décharge d'un accumulateur pour régler le niveau de courant continu à l'aide d'une valeur stockée dans l'accumulateur, caractérisé en ce que l'étage à valeur limite fournit un signal de commutation dans lequel le coefficient de fonctionnement dépend du niveau de courant continu du signal vidéo et le signal de commutation provoque, pour chaque période du signal vidéo, une charge et une décharge de l'accumulateur, de sorte que la régulation est une régulation de coefficient de fonctionnement.

2. Montage suivant la revendication 1, caractérisé en ce qu'un condensateur (3) sert d'accumulateur auquel est appliquée alternativement, par un générateur de valeur constante (6 ou 7), une intensité de charge ou une intensité de décharge ($i_1$ ou $i_2$), (Fig. 1).

3. Montage suivant la revendication 1, en particulier pour un signal numérique, caractérisé en ce qu'un étage sommateur (77, 78) sert d'accumulateur et reçoit, d'une manière correspondant à un signal d'horloge à haute fréquence (T) de manière répétée une valeur positive ou une valeur négative (75 ou 76) aussi longtemps que l'un ou l'autre des états du signal de commutation (D) apparaît à la sortie de l'amplificateur de valeur limite (72, 74), le signal de sortie de l'étage sommateur (77, 78) étant appliqué (Fig. 6) à la deuxième entrée de l'amplificateur de valeur limite.

4. Montage suivant la revendication 1 ou 2, caractérisé en ce que le signal (S) et le contenu de l'accumulateur sont additionnés par connexion en série d'un condensateur-accumulateur (3), et de la source de signaux, le contact de commutation du commutateur (5) est connecté à une borne de l'accumulateur (3), de préférence opposée à la masse, sur laquelle est également prélevé le signal présentant une position de consigne déterminée du niveau de référence ($S_{R1}$), des sources de courant (6, 7) sont connectées aux contacts de position d'extrémité (5a, 5b) du commutateur (5) et une tension ($U_R$) déterminant la position de consigne souhaitée de la valeur de référence ($S_{R1}$) est appliquée à la deuxième entrée de l'amplificateur de valeur de seuil (8), (Fig. 1).

5. Montage suivant l'une quelconque des revendications précédentes, caractérisé en ce que la valeur moyenne apparaissant dans l'accumulateur (60) est active sur la deuxième entrée (63b) de l'amplificateur de valeur de seuil (63), (Fig. 5).

6. Montage suivant la revendication 5, caractérisé en ce que le signal sous une forme numérique est appliqué à la première entrée (72a) d'un comparateur (72) et, qu'en fonction du signe de son signal de sortie, la première ou la seconde de deux valeurs de comptage (75 ou 76) de signes opposés est appliquée à un étage sommateur (77, 78) servant de premier accumulateur et que le signal de sortie de l'étage sommateur (77, 78) est appliqué, le cas échéant par l'intermédiaire d'un diviseur fixe (79, 80), à la deuxième entrée (72b) du comparateur.

7. Montage suivant l'une quelconque des revendications précédentes, caractérisé en ce que dans le cas d'une valeur de référence ($S_{Ro}$) située dans le domaine d'amplitude du signal (S), la relation

$$\frac{T_2}{T_3 - T_2} < \frac{s_1}{s_2} < \frac{T_3 - T_1}{T_1}$$

est au moins approximativement satisfaite, dans cette relation:

$T_1$ est l'intervalle, par exemple le domaine d'impulsions de synchronisation de ligne, dans lequel le signal (S) se situe au-dessus de la valeur de référence ($S_{Ro}$),

$T_2$ est l'intervalle, par exemple le domaine de signal vidéo, dans lequel le signal se situe en dessous de la valeur de référence ($S_{Ro}$),

$T_3$ est la durée de période du signal (S),

$s_1$ est la valeur diminuant effectivement le contenu de l'accumulateur dans un intervalle de décharge par unité de temps, et

$s_2$ est la valeur augmentant effectivement le contenu de l'accumulateur dans un intervalle de charge par unité de temps.

8. Montage suivant l'une quelconque des revendications précédentes, caractérisé en ce que pour le réglage d'une valeur de référence ($S_{Ro}$) située au bord du domaine d'amplitude (S), la relation

$$\frac{T_3 - T_1/4}{T_1/4} > \frac{s_1}{s_2} > \frac{T_3 - T_1}{T_1}$$

est au moins approximativement satisfaite, dans cette relation:

$T_1$ est l'intervalle, par exemple la crête d'impulsions de synchronisation de ligne, dans lequel le signal (S) se situe sur la valeur de référence ($S_{Ro}$),

$T_3$ est la durée de période du signal (S),

$s_1$ est la valeur diminuant effectivement le contenu de l'accumulateur dans un intervalle de décharge par unité de temps, et

$s_2$ est la valeur augmentant effectivement le contenu de l'accumulateur dans un intervalle de charge par unité de temps.

FIG.1

FIG.2

FIG.3

FIG.4

FIG.5

FIG.6